# EUROPEAN PATENT APPLICATION

(11) **EP 4 429 002 A1**
(43) Date of publication of application: **11.09.2024**
(21) Application number: 23773476.9
(22) Date of filing: 09.02.2023
(51) Int. Cl.: H01M 50/244, H01M 50/30

(54) **DIRECTIONAL PRESSURE RELIEF STRUCTURE, BATTERY BOX BODY, BATTERY, AND ELECTRIC APPARATUS**

(30) Priority: 22.03.2022 CN 202220625921 U
(71) Applicant: Contemporary Amperex Technology Co., Limited, Ningde, Fujian 352100 (CN)
(72) Inventor: YU, Xiaoyin, Ningde, Fujian 352100 (CN); HUANG, Zhijie, Ningde, Fujian 352100 (CN); MIAO, Huimin, Ningde, Fujian 352100 (CN)
(74) Representative: Jacob, Reuben Ellis
(86) International application number: PCT/CN2023/075096
(87) International publication number: WO 2023/179225

(57) **Abstract**

The present application relates to a directional pressure relief structure, a battery box body, a battery, and an electric apparatus. A pressure relief assembly (30) can control, according to a relationship between pressure inside a battery and preset pressure, a cover body (20) to switch between a pressure relief position and a sealing position, so as to open and close a pressure relief channel (11), thereby realizing reuse of the directional pressure relief structure (100).

## Description

### CROSS-REFERENCE TO RELATED APPLICATIONS

This application refers to Chinese Patent Application No. 202220625921.7, filed on March 22, 2022 and entitled "ORIENTED PRESSURE RELIEF STRUCTURE, BATTERY BOX, BATTERY, AND ELECTRIC APPARATUS", which is incorporated herein by reference in its entirety.

### TECHNICAL FIELD

This application relates to the field of battery technologies, and in particular, to a directional pressure relief structure, a battery box body, a battery, and an electric apparatus.

### BACKGROUND

With the increasing application of battery technologies in daily life, the safety performance of batteries is receiving more and more attention. Typically, the cause of battery safety issues is thermal runaway. As the temperature continues to rise, various reactions occur inside a battery, accompanied by the generation of a large amount of gas, leading to a sharp rise in internal pressure of the battery.

Therefore, to prevent the problem of battery explosion caused by the sharp rise in internal pressure, a pressure relief structure is provided in the battery. When the internal pressure of the battery rises sharply, the gas inside the battery can be discharged through the pressure relief structure, thus achieving the purpose of pressure relief and improving the safety performance of the battery.

However, when pressure is relieved for the battery through the pressure relief structure, the gas rushing out from inside the battery needs to break the pressure relief structure before it can be discharged. After one pressure relief event, the pressure relief structure cannot be reused, resulting in high use costs.

### SUMMARY

In view of this, it is necessary to address the problem that existing pressure relief structures are not reusable and have high use costs by providing an oriented pressure relief structure, a battery box, a battery, and an electric apparatus.

According to a first aspect, this application provides an oriented pressure relief structure for relieving pressure inside a battery. The oriented pressure relief structure includes: a main body, where the main body is provided with a pressure relief channel communicating with the inside and outside of the battery; a cover movably covering the main body; and a pressure relief assembly connected between the main body and the cover; where the pressure relief assembly is capable of controlling, based on a relationship between an internal pressure of the battery and a preset pressure, the cover to switch between a pressure relief position for opening the pressure relief channel and a sealing position for blocking the pressure relief channel.

In the technical solutions of the embodiments of this application, the cover can switch, under the control of the pressure relief assembly, between the pressure relief position and the sealing position based on the changes in the internal pressure of the battery, implementing automatic discharge of gas inside the battery and enabling reuse of the oriented pressure relief structure. This not only improves the safety performance of the battery but also significantly reduces use costs.

In some embodiments, the pressure relief assembly includes a rotating shaft, where the rotating shaft is disposed at one of the main body and the cover, the other one of the main body and the cover is provided with a shaft cavity for the rotating shaft to pass through, and the cover rotates around the main body through the rotating shaft.

In the technical solutions of the embodiments of this application, the cover rotates around the rotating shaft with respect to the main body, which can implement rapid switch of the cover between the pressure relief position and the sealing position.

In some embodiments, the pressure relief channel is located on one side of the rotating shaft in a radial direction of the rotating shaft.

In the technical solutions of the embodiments of this application, when the cover rotates around the rotating shaft, a gap is created between the cover and the pressure relief channel, allowing the gas inside the battery to be discharged through the pressure relief channel.

In some embodiments, the pressure relief assembly includes an elastic member connected between the main body and the cover, where the elastic member is located on the other side of the rotating shaft facing away from the pressure relief channel in the radial direction of the rotating shaft and is configured to provide a restoring force for restoring the cover from the pressure relief position to the sealing position.

In the technical solutions of the embodiments of this application, as the gas inside the battery is gradually discharged, the cover can rotate toward a side close to the pressure relief channel under the pressure of the elastic member until the cover is hermetically connected to the pressure relief channel, to be specific, restored from the pressure relief position to the sealing position. Therefore, the elastic member can implement quick restoring of the cover from the pressure relief position to the sealing position and allow for simpler structure.

In some embodiments, when in the sealing position, the elastic member is in a compressed state.

In the technical solutions of the embodiments of this application, when the cover is in the sealing position, the elastic member applies a pressure to the cover to make the cover rotate toward the side of the pressure relief channel, ensuring tight connection between the cover and the pressure relief channel and avoiding gas leakage.

In some embodiments, the main body is provided with a limiting portion, where the limiting portion is located on a side on which the pressure relief channel is located in the radial direction of the rotating shaft, and at least a portion of the cover abuts against the limiting portion under an action of the elastic member.

In the technical solutions of the embodiments of this application, the cover can be prevented from rotating excessively, thus ensuring hermetic connection between the cover and the pressure relief channel.

In some embodiments, the limiting portion is a limiting notch formed by recessing a surface of the main body facing the cover, and at least a portion of the cover abuts on the limiting notch.

In the technical solutions of the embodiments of this application, the cover can abut against the limiting notch, ensuring that the cover blocks the pressure relief channel.

In some embodiments, the oriented pressure relief structure includes a sealing member, where the sealing member is hermetically connected between the cover and the pressure relief channel, and the sealing member can improve the sealing performance between the cover and pressure relief channel.

According to a second aspect, this application provides a battery box including a box body and the foregoing oriented pressure relief structure, where the oriented pressure relief structure is disposed on the box body, and the box body is provided with an exhaust vent communicating with the pressure relief channel.

According to a third aspect, this application provides a battery including the foregoing battery box and a battery module disposed inside the battery box.

According to a fourth aspect, this application provides an electric apparatus including a power consuming body and the foregoing battery.

For the foregoing oriented pressure relief structure, battery box, battery, and electric apparatus, the pressure relief assembly can control, based on the relationship between an internal pressure of the battery and the preset pressure, the cover to switch between the pressure relief position and the sealing position to implement opening and closing of the pressure relief channel, thereby implementing reuse of the oriented pressure relief structure.

The foregoing description is merely an overview of the technical solutions of this application. For a better understanding of the technical means in this application such that they can be implemented according to the content of the specification, and to make the above and other objectives, features and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the embodiments below. The accompanying drawings are merely intended to illustrate the embodiments and are not intended to limit this application. In addition, in all the accompanying drawings, like reference signs denote like components. In the accompanying drawings:
FIG. 1 is a schematic diagram of an overall structure of an oriented pressure relief structure according to an embodiment of this application;
FIG. 2 is a cross-sectional view of the oriented pressure relief structure shown in FIG. 1;
FIG. 3 is a locally enlarged view of a location A in FIG. 2;
FIG. 4 is a schematic structural diagram of a battery box according to an embodiment of this application; and
FIG. 5 is an exploded structural view of the battery box shown in FIG. 4.

Reference signs: 1000. battery box; 100. oriented pressure relief structure; 200. box body; 10. main body; 20. cover; 30. pressure relief assembly; 40. sealing member; 11. pressure relief channel; 12. limiting portion; 31. rotating shaft; 32. shaft cavity; and 33. elastic member.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second" and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms in this application as appropriate to specific situations.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

During the use of traction batteries, their internal temperature continuously rises, and thermal runaway may even occur. As the temperature continues to rise, various reactions occur inside a battery, accompanied by the generation of a large amount of gas, leading to a sharp rise in internal pressure of the battery.

To prevent the problem of battery explosion caused by the sharp rise in internal pressure, a pressure relief structure is generally provided in the battery. When the internal pressure of the battery increases to a certain extent, the gas inside the battery will break through an explosion-proof sheet in the pressure relief structure, thereby discharging the gas.

However, the applicant has found that the pressure relief structures in the prior art usually can implement pressure relief only once. After the gas inside the battery breaks through the explosion-proof sheet and is discharged, the pressure relief structure cannot be restored to a sealed state, and the explosion-proof sheet needs to be replaced, resulting in inconvenient use and high costs of the pressure relief structure in the prior art.

In addition, when breaking through the explosion-proof sheet, the gas can only be discharged in a direction perpendicular to the explosion-proof sheet. However, in actual use, an installation environment of the battery is often complex, with other devices installed around the battery. When breaking through in a direction perpendicular to the explosion-proof sheet, the gas may affect normal operation of other devices around the battery.

In view of the above problems, the applicant has found through research that provision of an oriented pressure relief structure that can freely switch between opening and closing a pressure relief channel allows for the reuse of the oriented pressure relief structure.

Moreover, since the oriented pressure relief structure is provided with a cover for opening and closing the pressure relief channel, the cover can provide certain blockage to the pressure relief channel, causing the gas rushing out through the pressure relief channel to experience certain change in direction under the blockage of the cover. Therefore, an installation position of the cover can be used to achieve oriented discharge of gas, thereby implementing oriented pressure relief and avoiding the influence on the normal operation of other devices around the battery when the gas is discharged.

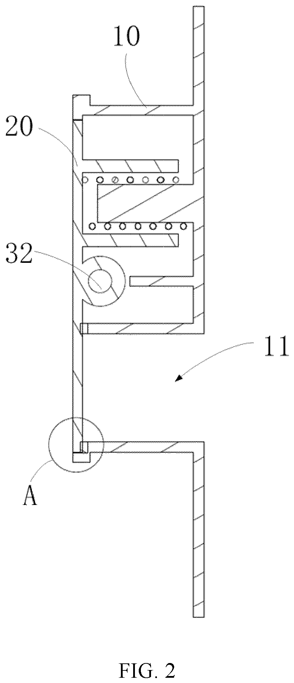

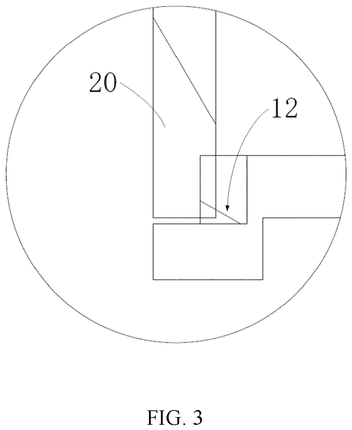

Referring to FIGs. 1, 2, and 3, FIG. 1 is a schematic diagram of an overall structure of an oriented pressure relief structure according to an embodiment of this application, FIG. 2 is a cross-sectional view of an oriented pressure relief structure according to an embodiment of this application, and FIG. 3 is a locally enlarged view of a location A in FIG. 2.

An embodiment of this application provides an oriented pressure relief structure 100 for relieving pressure inside a battery. The oriented pressure relief structure 100 includes a main body 10, a cover 20, and a pressure relief assembly 30. The main body 10 is provided with a pressure relief channel 11 communicating with the inside and outside of the battery. The cover 20 movably covers the main body 10, and the pressure relief assembly 30 is connected between the main body 10 and the cover 20. In addition, the pressure relief assembly 30 can control, based on a relationship between an internal pressure of the battery and a preset pressure, the cover 20 to switch between a pressure relief position for opening the pressure relief channel 11 and a sealing position for blocking the pressure relief channel 11.

It should be noted that the main body 10 is constructed as a hollow cylindrical structure, and the pressure relief channel 11 runs through the cylindrical structure along an axial direction thereof. When provided on a structure with pressure to be relieved, the main body 10 allows the pressure relief channel 11 to communicate with the internal space of the structure with pressure to be relieved, facilitating the discharge of gas inside the structure with pressure to be relieved. It can be understood that the main body 10 may alternatively be arranged as other structure than the cylindrical structure, for example, the main body 10 is arranged as a hollow rectangular structure or the like. This is not described herein.

Further, the cover 20 is a circular plate-shaped structure that matches the main body 10. The cover 20 covers the main body 10 in a direction perpendicular to an axial direction of the main body 10, allowing the cover 20 to block the pressure relief channel 11. It can be understood that when the main body 10 is arranged as other structure than the cylindrical structure, the cover 20 should have a corresponding shape that matches the opening shape of the main body 10. For example, when the main body 10 is a hollow rectangular structure, the cover 20 is a corresponding rectangular plate-shaped structure so as to be engaged with the main body 10.

In addition, the pressure relief assembly 30 connected between the main body 10 and the cover 20 is mainly for controlling the movement of the cover 20 relative to the main body 10, therefore the pressure relief assembly 30 can be arranged as a connecting structure such as a rotating shaft or a hinge. Specifically, the connection of the pressure relief assembly 30 allows the cover 20 to move relative to the main body 10 under the action of an external force, and to open or close the pressure relief channel 11 in the process of movement.

Specifically, the cover 20 can move relative to the main body 10 under the control of the pressure relief assembly 30. When the internal pressure of the battery is less than or equal to the preset pressure, the cover 20 is stationary relative to the main body 10 and covers the main body 10, in which case the cover 20 is in the sealing position for blocking the pressure relief channel 11. In this way, it can ensure that the inside of the battery is in a sealed state, ensuring the normal use of the battery.

When the internal pressure of the battery is greater than the preset pressure, the cover 20 moves relative to the main body 10 under the control of the pressure relief assembly 30 and switches from the sealing position to the pressure relief position for opening the pressure relief channel 11. Since the pressure relief channel 11 is opened, the gas inside the battery can be discharged through the pressure relief channel 11, thus achieving pressure relief of the battery and improving the safety performance of the battery.

In this way, the cover 20 can switch between the pressure relief position and the sealing position based on the changes in the internal pressure of the battery, thereby implementing automatic discharge of the gas inside the battery, improving the safety performance of the battery, and significantly reducing use costs.

In some embodiments, the pressure relief assembly 30 includes a rotating shaft 31, where the rotating shaft 31 is disposed at one of the main body 10 and the cover 20, the other one of the main body 10 and the cover 20 is provided with a shaft cavity 32 for the rotating shaft 31 to pass through, and the cover 20 rotates around the main body 10 through the rotating shaft 31. Specifically, in this embodiment, the rotating shaft 31 is provided on the main body 10, and the shaft cavity 32 is provided on the cover 20, to be specific, the cover 20 is rotationally connected to the main body 10 through the cooperation of the rotating shaft 31 and the shaft cavity 32. When the internal pressure of the battery is less than or equal to the preset pressure, the cover 20 covers the main body 10 and is perpendicular to an extension direction of the pressure relief channel 11 to block the pressure relief channel 11. When the internal pressure of the battery is greater than the preset pressure, the cover 20 rotates around the rotating shaft 31 under the impact force of the gas inside the battery, and at the same time, a gap is created between the cover 20 and the pressure relief channel 11, allowing the gas to be discharged through the gap.

Further, since the cover 20 is perpendicular to the extension direction of the pressure relief channel 11 and covers the pressure relief channel 11, even after the cover 20 rotates a certain angle around the rotating shaft 31, the gas discharged through the pressure relief channel 11 cannot be directly discharged in the extension direction of the pressure relief channel 11, but changes direction after blocked by the cover 20 instead and is discharged through the gap between the cover 20 and the pressure relief channel 11.

In this way, oriented pressure relief can be implemented for the battery, preventing the gas from directly rushing out of the pressure relief channel 11 and damaging other devices around the battery.

In some embodiments, the pressure relief channel 11 is located on one side of the rotating shaft 31 in a radial direction of the rotating shaft 31. Specifically, to facilitate the rotation of the cover 20 relative to the main body 10, the rotating shaft 31 is provided in the middle of the main body 10 and divides the main body 10 into upper and lower parts. Similarly, the shaft cavity 32 is provided in the middle of the cover 20 and divides the cover 20 into upper and lower parts respectively corresponding to the upper and lower parts of the main body 10.

On a plane parallel to the cover 20, the pressure relief channel 11 is located on one side of the rotating shaft 31 in the radial direction of the rotating shaft 31, to be specific, the pressure relief channel 11 is provided in the lower part of the main body 10. In this way, when the cover 20 rotates around the rotating shaft 31, a gap is created between the cover 20 and the pressure relief channel 11, allowing the gas inside the battery to be discharged through the pressure relief channel 11.

In some embodiments, the pressure relief assembly 30 includes an elastic member 33 connected between the main body 10 and the cover 20, where the elastic member 33 is located on the other side of the rotating shaft 31 facing away from the pressure relief channel 11 in the radial direction of the rotating shaft 31 and is configured to provide a restoring force for restoring the cover 20 from the pressure relief position to the sealing position, implementing quick reset of the cover 20.

Specifically, the elastic member 33 may be provided as a spring. On a plane parallel to the cover 20, the spring is disposed on the other side away from the pressure relief channel 11 in the radial direction of the rotating shaft 31, to be specific, the spring is provided in the upper part of the main body 10. In this way, as the gas inside the battery is gradually discharged, the cover 20 can rotate toward a side close to the pressure relief channel 11 under the pressure of the spring until the cover 20 is hermetically connected to the pressure relief channel 11, to be specific, restored from the pressure relief position to the sealing position. Certainly, the elastic member 33 may alternatively be arranged as other elastic structural member than the spring. This is not described herein.

Further, when in the sealing position, the elastic member 33 is in a compressed state. In this way, when the cover 20 is in the sealing position, the elastic member 33 applies a pressure to the cover 20 to make the cover 20 rotate toward the side of the pressure relief channel 11, ensuring tight connection between the cover 20 and the pressure relief channel 11 and avoiding gas leakage.

In some embodiments, the main body 10 is provided with a limiting portion 12, where the limiting portion 12 is located on a side on which the pressure relief channel 11 is located in the radial direction of the rotating shaft 31, and at least a portion of the cover 20 abuts against the limiting portion 12 under an action of the elastic member 33.

Specifically, the limiting portion 12 is provided in the lower part of the main body 10, that is, together with the pressure relief channel 11 on a same side of the rotating shaft 31. When the cover 20 is in the sealing position, the cover 20 tends to rotate toward the side close to the pressure relief channel 11 under the pressure of the elastic member 33. The provision of the limiting portion 12 allows the lower part of the cover 20 to abut against the limiting portion 12, avoiding excessive rotation of the cover 20, and thus ensuring hermetic connection between the cover 20 and the pressure relief channel 11.

In some embodiments, the limiting portion 12 is a limiting notch formed by recessing a surface of the main body 10 facing the cover 20, and at least a portion of the cover 20 abuts on the limiting notch. Specifically, under the pressure of the elastic member 33, the cover 20 tends to rotate toward the side close to the pressure relief channel 11, therefore, a limiting notch recessed inward is formed at the lower part of the main body 10, allowing the lower part of the cover 20 to abut against the limiting notch, and ensuring that the cover 20 blocks the pressure relief channel 11.

In some embodiments, the oriented pressure relief structure 100 includes a sealing member 40, where the sealing member 40 is hermetically connected between the cover 20 and the pressure relief channel 11. Specifically, the sealing member 40 is a sealing strip that matches a radial contour of the pressure relief channel 11, and the sealing strip is sealed between the cover 20 and the pressure relief channel 11 along the radial contour of the pressure relief channel 11, which can improve the sealing performance between the cover 20 and the pressure relief channel 11.

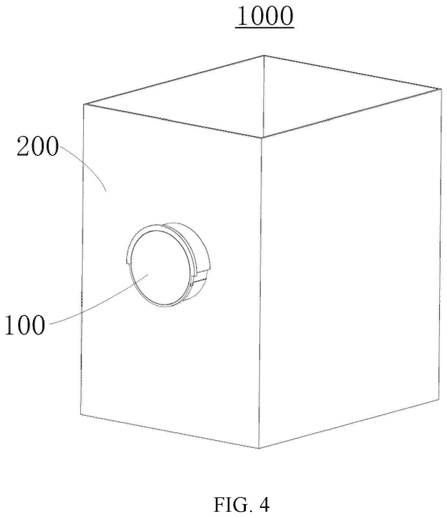

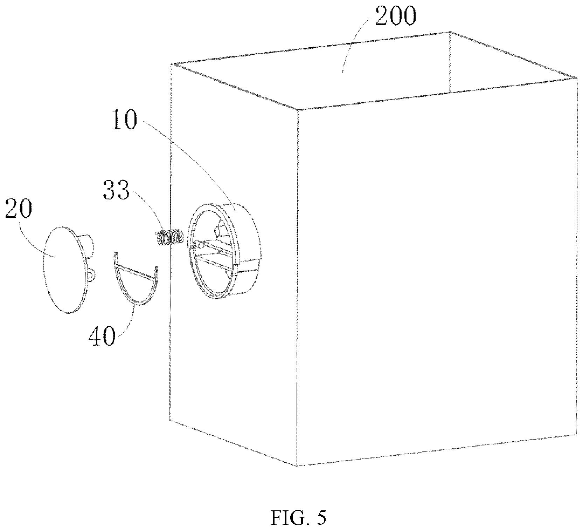

Referring to FIGs. 4 and 5, FIG. 4 is a schematic diagram of an overall structure of a battery box according to an embodiment of this application, and FIG. 5 is an exploded structural view of a battery box according to an embodiment of this application. Following the idea of the foregoing oriented pressure relief structure 100, this application further provides a battery box 1000 including a box body 200 and the foregoing oriented pressure relief structure 100. The oriented pressure relief structure 100 is disposed on the box body 200, and the box body 200 is provided with an exhaust vent communicating with the pressure relief channel 11. Gas generated inside the box body 200 can enter the pressure relief channel 11 through the exhaust vent and then be discharged through the oriented pressure relief structure 100.

Following the idea of the foregoing battery box 1000, this application further provides a battery including the foregoing battery box 1000 and a battery module disposed inside the battery box 1000.

Following the idea of the foregoing battery, this application further provides an electric apparatus battery including a power consuming body 10 and the foregoing battery.

In specific use of this application, when an internal pressure of the battery box 1000 is less than or equal to a preset pressure, the cover 20 abuts against the limiting notch under the pressure of the spring, thus making the cover 20 be located in the sealing position for blocking the pressure relief channel 11. When the internal pressure of the battery box 1000 is greater than the preset pressure, the gas inside the battery box 1000 enters the pressure relief channel 11 through the exhaust vent, the cover 20 rotates toward a side away from the pressure relief channel 11 under the impact force of the gas, and a gap is created between the cover 20 and the pressure relief channel 11, so that the pressure relief channel 11 is opened, and the gas inside the battery box 1000 is smoothly discharged.

As the gas inside the battery box 1000 is gradually discharged, the internal pressure of the battery box 1000 gradually decreases. When the internal pressure of the battery box 1000 is less than the preset pressure, the cover 20 rotates toward a side close to the pressure relief channel 11 under the pressure of the spring until the cover 20 abuts against the limiting notch, thereby being restored from the pressure relief position to the sealing position.

The oriented pressure relief structure 100, battery box 1000, battery, and electric apparatus in the foregoing embodiments have at least the following advantages:
(1) The pressure relief assembly 30 can control the cover 20 to flexibly switch between the pressure relief position and the sealing position, implementing the reuse of the oriented pressure relief assembly 30 and reducing use costs.
(2) The cover 20 opens or closes the pressure relief channel 11 through rotation, allowing the gas inside the battery to be discharged laterally through the pressure relief channel 11, preventing the gas from directly rushing out of the pressure relief channel 11 which otherwise affects normal operation of other devices around the battery.
(3) The elastic member 33 applies a certain pressure to the cover 20, allowing the cover 20 to abut against the limiting notch, thereby improving the airtightness between the cover 20 and the pressure relief channel 11.

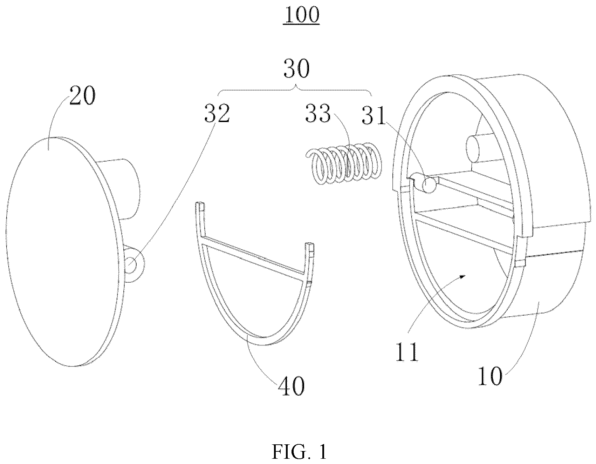

According to some embodiments of this application, referring to FIG. 1, this application provides an oriented pressure relief structure 100 including a main body 10 provided with a pressure relief channel 11 and a cover 20 that can rotate relative to the main body 10 around a rotating shaft 31. When the cover 20 is in a sealing position, the cover 20 abuts against a limiting notch on the main body 10 under the pressure of an elastic member 33, thereby ensuring a tight connection between the cover 20 and the pressure relief channel 11. When an internal pressure of a battery is greater than a preset pressure, the cover 20 rotates toward a side away from the pressure relief channel 11 under the impact force of gas inside the battery, so as to switch from the sealing position to a pressure relief position.

When the cover 20 is in the pressure relief position, the gas inside the battery can be discharged through a gap between the cover 20 and the pressure relief channel 11. In addition, due to the blockage of the cover 20, the gas is discharged from the side instead of directly rushing out of the pressure relief channel 11 and affecting other devices around the battery.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An oriented pressure relief structure for relieving pressure inside a battery, wherein the oriented pressure relief structure comprises:
a main body, wherein the main body is provided with a pressure relief channel communicating with the inside and outside of the battery;
a cover movably covering the main body; and
a pressure relief assembly connected between the main body and the cover;
wherein the pressure relief assembly is capable of controlling, based on a relationship between an internal pressure of the battery and a preset pressure, the cover to switch between a pressure relief position for opening the pressure relief channel and a sealing position for blocking the pressure relief channel.

2. The oriented pressure relief structure according to claim 1, wherein the pressure relief assembly comprises a rotating shaft, the rotating shaft is disposed at one of the main body and the cover, the other one of the main body and the cover is provided with a shaft cavity for the rotating shaft to pass through, and the cover rotates around the main body through the rotating shaft.

3. The oriented pressure relief structure according to claim 2, wherein the pressure relief channel is located on one side of the rotating shaft in a radial direction of the rotating shaft.

4. The oriented pressure relief structure according to claim 3, wherein the pressure relief assembly comprises an elastic member connected between the main body and the cover, and the elastic member is located on the other side of the rotating shaft facing away from the pressure relief channel in the radial direction of the rotating shaft and is configured to provide a restoring force for restoring the cover from the pressure relief position to the sealing position.

5. The oriented pressure relief structure according to claim 4, wherein when in the sealing position, the elastic member is in a compressed state.

6. The oriented pressure relief structure according to claim 4 or 5, wherein the main body is provided with a limiting portion, the limiting portion is located on a side on which the pressure relief channel is located in the radial direction of the rotating shaft, and at least a portion of the cover abuts against the limiting portion under an action of the elastic member.

7. The oriented pressure relief structure according to claim 6, wherein the limiting portion is a limiting notch formed by recessing a surface of the main body facing the cover, and at least a portion of the cover abuts on the limiting notch.

8. The oriented pressure relief structure according to any one of claims 1 to 7, wherein the oriented pressure relief structure comprises a sealing member, and the sealing member is hermetically connected between the cover and the pressure relief channel.

9. A battery box, comprising a box body and the oriented pressure relief structure according to any one of claims 1 to 8, wherein the oriented pressure relief structure is disposed on the box body, and the box body is provided with an exhaust vent communicating with the pressure relief channel.

10. A battery, comprising the battery box according to claim 9 and a battery module disposed inside the battery box.

11. An electric apparatus, **characterized by** comprising a power consuming body and the battery according to claim 10.
